# EUROPEAN PATENT SPECIFICATION

(11) **EP 0 718 068 B1**
(45) Date of publication and mention of the grant of the patent: **21.04.1999**
(21) Application number: 95120045.0
(22) Date of filing: 19.12.1995
(51) Int. Cl.: B23K 11/11, B62D 29/00, B29C 37/00

(54) **Method of connecting different members by welding**
Verfahren zum Verschweissen von verschiedenen Teilen
Méthode pour le soudage d'éléments différents

(30) Priority: 23.12.1994 IT TO941067
(43) Date of publication of application: 26.06.1996
(73) Proprietor: FIAT AUTO S.p.A., 10135 Torino (IT)
(72) Inventor: Da Re', Mario, I-10100 Torino (IT)
(74) Representative: Plebani, Rinaldo

(56) References cited:
- EP-A- 0 173 656
- EP-A- 0 340 094
- DE-A- 3 210 310
- FR-A- 1 171 051
- GB-A- 2 119 311

## Description

The present invention relates to a method of connection by welding which makes it possible electrically to spot weld, for instance using the same apparatus that is used for sheet metal components, structural members formed from a material which may be identical or different.

It is known that the bodyworks of vehicles are currently produced by electric spot welding of different structural members formed by stamping from sheet steel. However, as a material for the production of bodywork members, steel has two serious drawbacks: in the first instance it is relatively heavy and, secondly, it has a low resistance to corrosion which exposes the bodywork to the risk of rusting. In order to remedy both these drawbacks it has been proposed to replace the structural steel members, or at least some of these members, with similar members produced from other materials, typically aluminium (or a light alloy) or a thermoplastic or thermo-hardening synthetic material. Attempts have been made, for instance, to replace some outer parts of the bodywork (doors, bonnets, mudguards, etc.), with members stamped from a plastic material, but these have had few or disappointing results.

The current trend, in the automobile industry at least, is therefore to replace only those internal, non-visible members of the bodywork forming its frame by plastic members, while continuing to produce the outer part of the bodywork from sheet metal joining the different materials like e.g. shown in DE-A-3210310. Bodyworks made entirely (or to a large extent) from aluminium or its alloys are also known. However, members made both from aluminium alloys and synthetic plastic materials are difficult or impossible to connect to one another and/or to conventional members made of steel by means of the electric spot welding methods commonly used. This makes it necessary to use different connection systems, which are less reliable and/or cost-effective than welding (for instance gluing), with the result that it is no longer possible to make use of the welding lines currently used for sheet steel bodyworks, which lines are generally highly robotised and therefore account for a substantial proportion of a company's assets.

The object of the invention is to provide a method of connection by welding which makes it possible to assemble by welding, in particular using those electric spot welding methods that are currently known, bodywork members made from different materials, typically from steel and a synthetic plastic material. A further object of the invention is to provide a method of connection by welding which can be used to connect different members by electric spot welding without taking account of the material from which they are produced.

The invention therefore provides a method of connection by welding as defined by claim 1.

It is therefore evident that it is possible electrically to spot weld a plastic member provided with a plurality of these inserts made from sheet steel to a conventional structural member stamped from sheet steel, or that it is possible to connect, by electric spot welding, two members made entirely of plastic, provided that both of these are provided with the above-mentioned sheet steel inserts in corresponding positions. Similarly, it is possible to connect, by spot welding, members made from any material, for instance steel with aluminium, aluminium with plastic, aluminium with aluminium, etc. This means that it is possible to produce the bodyworks of vehicles with the maximum possible freedom as regards the choice of materials, carrying out assembly rapidly and simply, in a conventional manner, on existing lines and using existing robots and, in particular, with the maximum reliability.

In this way it is also possible to compensate any differential thermal expansion between the members joined together by welding using the method of the invention, when these are made from materials having substantially different coefficients of thermal expansion, as is for instance the case with plastic and steel.

It is lastly evident that it is possible to carry out the method of the invention using, where necessary, welding techniques other than electric spot welding; for instance, in cases in which it is possible to bring tools close to a single side of the connection, it is useful to use laser sources, while in other cases it may be advantageous to use the known technique of "clinching", although using the method described.

Further characteristic features and advantages of the invention will be set out in the following description of two non-limiting embodiments made with reference to the accompanying drawings, in which:
Fig. 1 shows a stage of the method of the invention according to a first embodiment thereof;
Fig. 2 shows a subsequent stage of the method of the invention according to the embodiment shown in Fig. 1;
Fig. 3, (a) and (b), illustrates in sequence the same two stages of Fig. 1 and 2 of the method of the invention according to a different embodiment thereof.

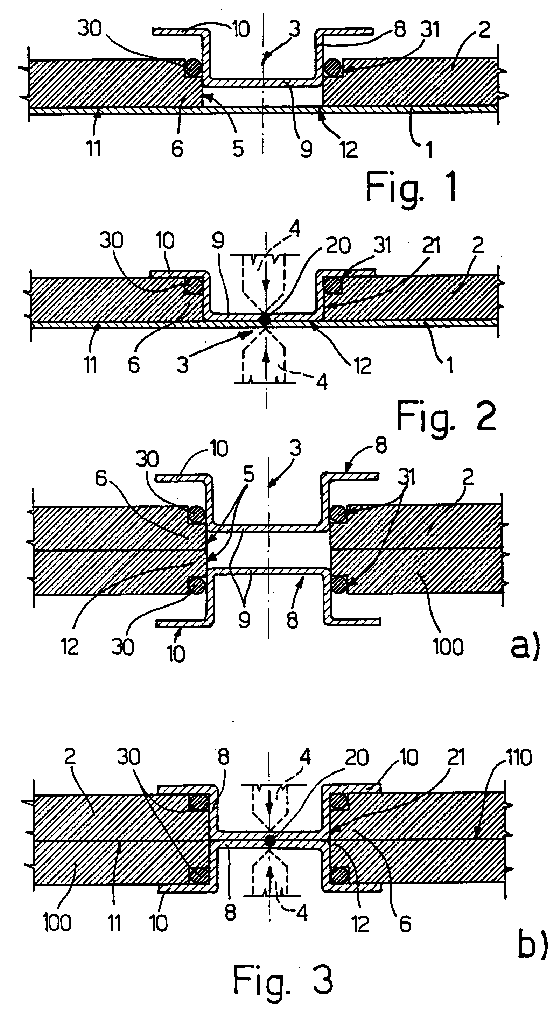

In Figs. 1 and 2, two different structural members to be connected together by welding are shown by 1 and 2; in particular, the members 1 and 2 are made from different materials: the member 1 is made from sheet steel and the member 2 from a stamped synthetic plastic material. The members 1 and 2 are preferably structural bodywork members of an automobile vehicle and may be of any shape and dimensions; the member 1 preferably forms part of an outer "skin" of the bodywork, while the plastic member 2 forms an internal framework thereof, which is to be connected to the member 1 along an ideal connection line 3, generally disposed so that it is not visible when the bodywork is assembled.

According to the method of the invention, the connection along the line 3 is carried out by welding, in particular by electric spot welding carried out by known electrodes 4 of a known welding gun (not shown), in turn forming part of a known robot plant (not shown) for the assembly and welding of vehicle bodywork components.

In particular, the method of the invention entails, in the first instance, the production on the plastic member 2, or on the member to be connected which is made from a material which cannot be welded by the electrodes 4, a plurality of housings 5 (Fig. 1), for instance formed by circular holes provided to pass through a portion 6 of the member 2 disposed along the planned connection line 3. These housings 5 may be obtained directly together with the member 2, for instance by means of webs appropriately disposed in the mould during a stamping and injection stage thereof, or may be obtained afterwards by mechanical machining, for instance by drilling.

Together with the production of the housings 5, the method of the invention also includes the production, for instance by cutting and stamping or using any other known method, of a plurality of inserts 8 adapted to be housed in the housings 6 and made from a metal sheet, in this case a sheet of ferrous material; in this way the inserts 8 are made from the same material (in the sense that ferro-carbon alloys, even if of different composition and/or with different additional alloying elements, are used in both cases) as the member 1 and in any case, from a material that can be readily welded therewith, in particular by electric spot welding.

According to a preferred embodiment, the inserts 8 are produced in the form of cylindrical cups obtained by drawing and cutting from a sheet of ferrous material so as to have internal dimensions greater than the dimensions of the respective welding guns 4 which may therefore be introduced into the concave sections of the cups 8, as shown.

In further detail, each cup 8 has a plane base wall 9 and, on the opposite side, respective axial shoulder means formed by an outer circular peripheral flange 10; the depth of drawing with which the cups 8 are produced is substantially equivalent to the depth of the housing 5 in which they are to be mounted (in this case equivalent to the thickness of the member 2).

According to a further stage of the method of connection by welding of the invention, after producing the housings 5 and cups 8, permanent assembly is carried out by force fitting of these latter in the respective housings 5 in the manner shown in Fig. 2, so that the base wall 9 is disposed substantially edgewise with respect to a surface 11 of the portion 6 of the member 2 adapted to come into contact with the other member to be welded 1, in particular with a corresponding portion 12 thereof also disposed along the connection line 3; the correct positioning of the base wall 9 is obtained by means of the flange 10 which, when the cup 8 is inserted in the housing 5, comes into abutment with a surface 13, opposite to the surface 11, of the member 2 (Fig. 2).

The method of connection by welding according to the invention, lastly comprises the subsequent stages of superimposed coupling of the portions 6 and 12 along the connection line 3, such that the surfaces 9 are facing one another and in contact with the sheet member 1; and of electric spot welding, in a known manner using the guns 4, of each insert (8) borne by the portion 6 (in this case its base wall 9) directly to the corresponding portion 12 of the member 1 coupled by superimposition on the portion 6.

In this way, the wall 9 and the member 1, which are made from materials that are identical or at least compatible, are locally fused and generate a weld spot 20, which permanently ensures the connection of the insert 8 to the member 1; the member 2 is consequently permanently fastened to the member 1, both because it bears the rigid insert 8 and because it remains, after welding, packed between the portion 12 of the member 1 and the flange 10 of the insert 8 (Fig. 2) which now forms a single body with the member 1.

Since the inserts 8 are normally made from sheet steel and the members 2 instead from a plastic material, i.e. from two materials which have substantially different coefficients of thermal expansion, there could be, in use, when assembly and welding is complete, differential thermal expansions which could generate internal stresses likely to weaken the connection obtained in the long term. In order to remedy this drawback, the inserts 8, according to a further characteristic feature of the method of the invention, are housed in the respective housings 5 with a predetermined lateral clearance 21 (Fig. 2) able to allow these differential thermal expansions; the force fitting of the inserts 8 in the housings 5 is therefore carried out, according to the invention, by interposing an elastically deformable retention member 30 between the insert 8 and the housing 5.

In this case, the member 30 is formed by an O-ring of known type, housed in an annular groove 31 provided within the housing 5 on the side opposite to the surface 11, in a position such that it remains, when the insert 8 is inserted into the housing 5, facing the flanged shoulder means 10 borne by the insert 8. When assembly and welding are complete, therefore, the O-ring 30 remains covered and protected by the flange 10 and axially contained between the latter and the base wall of the groove 31; this has a stepped shape, so as to contain the O-ring 30 peripherally as well, on the exterior thereof; the O-ring 30 may therefore exert its elasticity only towards the lateral wall of the cup 8 on which it is fitted in contact and which is not, vice versa, in contact with the lateral wall of the housing 5, as a result of the clearance 21.

Consequently, while ensuring the impossibility of accidental removal of the cup 8 from the member 2 prior to the conduct of the welding stage, there is at the same time some possibility of relative movement between the cup 8 and the member 2. Possibly, for greater safety, adhesive may be interposed between the flange 10 and the member 2, in order to prevent any possibility of axial sliding with respect to the housing 5.

Fig. 3 shows the same two stages as Figs. 1 and 2, but in the case in which the members to be joined are a member 2 and, in place of the sheet member 1, a member 100 possibly made from a material which cannot be electrically spot welded, for instance a synthetic plastic material whose chemical nature is identical to or possibly completely different from that forming the member 2. In this case, both the members to be welded are provided with housings 5 provided along the connection line 3 of the respective portions 6 and 12, and both bear, housed rigidly within these housings 5, a plurality of identical inserts 8 formed by cups of ferrous alloy sheet, in particular in the same way as illustrated above, or inserted into the housings 5 with a lateral clearance 21 and held elastically force fitted therein by O-rings 30 housed in respective grooves 31 of the housings 5 and contained therein by the flanges 10.

The cups 8 are mounted in corresponding positions on the portions 6 and 12, with the base walls 9 respectively on the edge of opposite surfaces 11 and 110 of the members 2 and 100, adapted to come into contact in use with portions 6 and 12 coupled by superimposition. Consequently, as the only difference from what has been described above, during the welding stage the inserts 8 of the member 2 are welded electrically by a spot weld 20 to the inserts 8 of the member 100, rather than directly on the latter; the spots 20 are formed by reciprocally joining the opposite base walls 9 of the inserts 8 brought into a corresponding position by the members 2 and 100 which, on the basis of what has been described, are in direct contact with one another. The result is therefore to connect the members 2 and 100, since both remain packed between the opposite flanges 10 of the opposite cups 8 disposed in a corresponding position and are made rigid by the respective spots 20.

It is lastly evident that the material used for the cups 8 of the member 100 (or the member 1) may also differ from the material used for the cups 8 of the member 2, formed by instance from any metal alloy, provided that it can be readily welded by means of the electrodes 4 to the material of the cups 8 of the member 2. It is also evident that, while the method of the invention is adapted for the production of vehicle bodyworks having a plastic framework and an outer skin of sheet steel, using those welding lines currently used for bodyworks made entirely from metal, this method may also be used to connect any members using welding techniques other than electric spot welding, for instance laser welding, etc. The method of the invention may also be used to connect parts of plastics of different chemical composition, which cannot be welded using welding techniques for known plastic materials (ultrasound, hot blade, etc.), in this case producing the inserts 8 also from a plastic material, but in this case of a chemical composition such that the inserts 8 can be welded together (or with one of the members to be welded) using the above-mentioned techniques.

## Claims

1. A method of connection by welding, in particular by electric spot welding, of different members (1;100,2), comprising the following stages:
- production, on at least a first member (2) to be welded, of at least one housing (5) for a first filler insert (8);
- production of this first filler insert (8) from a material selected from the group including: a material that can be readily welded with an identical material; a material that can be readily welded with the material from which a second member (1;100) to be welded is produced; a material that can be readily welded with a second predetermined material;
- permanent assembly of this insert (8) in the housing (5);
- superimposed coupling of a portion of the first member (2) to be welded provided with this first insert (8) to a corresponding portion of the second member (1;100) to be welded;
- welding of this first filler insert (8) directly on the corresponding portion of the second member (1) to be welded;
- said welding stage may also be carried out between said first filler insert (8) and a corresponding second filler insert (8) placed in a corresponding position with respect to the second member (100) to be welded and made from the same material as the first insert (8) or from the second predetermined material;
- the insert (8) is housed in the housing (5) with a predetermined lateral clearance such as to enable differential thermal expansions between the member to be welded (100;2) and the insert; characterized in that
- the insert is held permanently in the housing, by force fitting, by interposing an elastically deformable retention member (30) between the insert (8) and the housing (5);
- the insert (8) is in the form of cup, the cup being disposed in the housing (5) of the first member to be welded with its own plane base wall (9) disposed substantially edgewise with respect to a surface of the first member adapted to come into contact with the second member to be welded, the correct positioning of the base wall (9) being obtained by respective axial shoulder means formed as a flange (10) provided on the cup, on the side opposite to the base wall (9).

2. A method as claimed in claim 1, characterized in that the second member (1) to be welded is made from sheet steel and in that the first insert (8) is produced by cutting and stamping from a sheet of ferrous material of the same or similar chemical composition.

3. A method as claimed in claim 1, characterized in that the first and second members (2,100) are made from materials that cannot be electrically welded and are both provided with a plurality of housings (5) for inserts (8), the first and second inserts both being produced by cutting and stamping from sheets of ferrous material of the same or similar chemical composition.

4. A method as claimed in claim 2 or 3, characterized in that the first member (2) to be welded is an internal framework of a vehicle bodywork component, this framework being produced by stamping from a synthetic plastic material.

5. A method as claimed in anyone of claims 1 to 4, characterized in that the elastic retention member (30) is formed by an O-ring housed in a groove (31) of the housing (5) provided in a position such that it remains facing, when the insert (8) is inserted into the housing, respective axial shoulder means formed as flanges (10) borne by this insert (8).

6. A method as claimed in one of the preceding claims, characterized in that said cups (8) are made from sheet ferrous material.

7. A method as claimed in claim 6, characterized in that the welding stage is carried out by electric spot welding, using respective welding guns (4) of predetermined dimensions and in that cups (8) having internal dimensions greater than the dimensions of the welding guns (4) are used, such that these guns may be caused to penetrate within the cups (8) in order to interact with the respective plane base walls (9) thereof.

8. A method as claimed in one of claims 1 to 6, characterized in that the welding stage is carried out using a technique requiring the tools to be brought towards a single side of the connection, preferably by laser or "clinch" welding.

## Patentansprüche

1. Verfahren zum Verbinden von verschiedenen Bauelementen (1; 100, 2) durch Schweißen, insbesondere durch elektrisches Punktschweißen, welches die folgenden Schritte umfaßt:
- Bilden wenigstens eines Einschnittes (5) für eine Zusatzmetalleinlage (8) an wenigstens einem ersten zu schweißenden Bauelement (2);
- Bilden dieser ersten Zusatzmetalleinlage (8) aus einem Material, das aus der Gruppe gewählt ist, die ein Material, das ohne weiteres mit einem identischen Material verschweißt werden kann, ein Material, das ohne weiteres mit einem Material verschweißt werden kann, aus dem ein zweites zu schweißendes Bauelement (1; 100) gebildet ist, und ein Material umfaßt, das problemlos mit einem zweiten bestimmten Material verschweißt werden kann;
- dauerhaftes Anordnen dieser Einlage (8) im Einschnitt (5);
- überlagernde Verbindung eines Teils des ersten zu schweißenden Bauelementes (2), das mit dieser ersten Einlage (8) versehen ist, mit einem entsprechenden Teil des zweiten zu schweißenden Bauelementes (1; 100);
- Schweißen dieser ersten Zusatzmetalleinlage (8) direkt auf den entsprechenden Teil des zweiten zu schweißenden Bauelementes (1), wobei
- der Schweißschritt auch zwischen der ersten Zusatzmetalleinlage (8) und einer zweiten entsprechenden Zusatzmetalleinlage (8) ausgeführt werden kann, die an einer entsprechenden Stelle bezuglich des zweiten zu schweißenden Bauelementes (100) vorgesehen ist und aus dem gleichen Material wie die erste Einlage (8) oder aus dem zweiten bestimmten Material besteht;
- die Einlage (8) im Einschnitt (5) mit einem bestimmten seitlichen Zwischenraum aufgenommen wird, derart, daß verschiedene Wärmeausdehnungen zwischen dem zu schweißenden Bauelement (100; 2) und der Einlage möglich sind dadurch gekennzeichnet, daß die Einlage dauerhaft im Einschnitt durch Presspassen gehalten wird, indem ein elastisch verformbares Halteelement (30) zwischen der Einlage (8) und dem Einschnitt (5) angeordnet wird;
- die Einlage (8) in Form eines Bechers ausgebildet wird, welcher Becher im Einschnitt (5) des ersten zu schweißenden Bauelementes so angeordnet wird, daß seine eigene ebene Bodenwand (9) im wesentlichen Kante an Kante bezüglich einer Außenfläche des ersten Bauelementes angeordnet ist, die in Kontakt mit dem zweiten zu schweißenden Bauelement kommen soll, wobei die richtige Positionierung der Bodenwand (9) durch jeweilige axiale Schultereinrichtungen erzielt wird, die als ein Flansch (10) ausgebildet sind, der am Becher auf der der Bodenwand (9) gegenüberliegenden Seite ausgebildet ist.

2. Verfahren nach Anspruch 1, dadurch gekennzeichnet, daß das zweite zu schweißende Bauelement (1) aus einem Stahlblech besteht und daß die erste Einlage (8) dadurch gebildet wird, daß sie aus einem Blech aus einem Eisenmaterial mit derselben oder einer ähnlichen chemischen Zusammensetzung ausgeschnitten und ausgestanzt wird.

3. Verfahren nach Anspruch 1, dadurch gekennzeichnet, daß das erste und das zweite Bauelement (2, 100) aus Materialien bestehen, die elektrisch nicht verschweißt werden können, und daß beide Baulemente mit mehreren Einschnitten (5) für Einlagen (8) versehen werden, wobei die erste und die zweite Einlage durch Ausschneiden und Ausstanzen aus Blechen aus einem Eisenmaterial mit derselben oder einer ähnlichen chemischen Zusammensetzung gebildet werden.

4. Verfahren nach Anspruch 2 oder 3, dadurch gekennzeichnet, daß das erste zu schweißende Bauelement (2) der Innenrahmen eines Fahrzeugkarosseriebauteils ist, wobei dieses Karosseriebauteil dadurch erzeugt wurde, daß es aus einem Kunststoffmaterial ausgestanzt wurde.

5. Verfahren nach einem der Ansprüche 1 bis 4, dadurch gekennzeichnet, daß das elastische Halteelement (30) aus einem O-Ring besteht, der in einer Nut (31) des Einschnittes (5) aufgenommen ist, die an einer derartigen Stelle vorgesehen wird, daß sie dann, wenn die Einlage (8) in den Einschnitt eingesetzt ist, den axialen Schultereinrichtungen jeweils zugewandt bleibt, die als Flansche (10) ausgebildet sind, die von dieser Einlage (8) ausgehen.

6. Verfahren nach einem der vorhergehenden Ansprüche, dadurch gekennzeichnet, daß die Becher (8) aus einem Eisenblechmaterial gebildet werden.

7. Verfahren nach Anspruch 6, dadurch gekennzeichnet, daß der Schweißschritt durch elektrisches Punktschweißen ausgeführt wird, indem jeweilige Schweißpistolen (4) mit bestimmten Abmessungen verwandt werden, und daß die Becher (8) Innenabmessungen haben, die größer als die Innenabmessungen der benutzten Schweißpistolen (4) sind, derart daß diese Pistolen dazu gebracht werden können, in die Becher (8) einzutreten, um mit deren jeweiligen ebenen Bodenwänden (9) zu wechselwirken.

8. Verfahren nach einem der Ansprüche 1 bis 6, dadurch gekennzeichnet, daß der Schweißschritt unter Verwendung eines technischen Verfahrens, das es erforderlich macht, die Werkzeuge an einer einzigen Seite der Verbindung anzuordnen, insbesondere durch Laserschweißen oder Preßschweißen ausgeführt wird.

## Revendications

1. Procédé de connexion par soudage, en particulier par soudage électrique par points, de différents éléments (1 ; 100, 2), comprenant les étapes suivantes :
création, sur au moins un premier élément (2) à souder, d'au moins un logement (5) pour un premier insert de remplissage (8) ;
préparation de ce premier insert de remplissage (8) en une matière choisie dans le groupe incluant : une matière qui peut être facilement soudée à une matière identique ; une matière qui peut être facilement soudée à la matière à partir de laquelle est produit un deuxième élément (1 ; 100) à souder ; une matière qui peut être facilement soudée à une deuxième matière prédéterminée ;
assemblage permanent de cet insert (8) dans le logement (5) ;
couplage en superposition d'une partie du premier élément (2) à souder, pourvu de ce premier insert (8), à une partie correspondante du deuxième élément (1 ; 100) à souder ;
soudage de ce premier insert de remplissage (8) directement sur la partie correspondante du deuxième élément (1) à souder ;
dans lequel la dite étape de soudage peut également être effectuée entre le dit premier insert de remplissage (8) et un deuxième insert de remplissage correspondant (8) placé dans une position correspondante par rapport au deuxième élément (100) à souder et fabriqué en la même matière que le premier insert (8) ou en la deuxième matière prédéterminée ;
l'insert (8) est placé dans le logement (5) avec un jeu latéral prédéterminé de façon à permettre des dilatations thermiques différentielles entre l'élément à souder (100 ; 2) et l'insert correspondant ;
caractérisé en ce que l'insert est maintenu de façon permanente dans le logement, par emmanchement à force, par interposition d'un élément de retenue élastiquement déformable (30) entre l'insert (8) et le logement (5) ;
l'insert (8) est sous la forme d'une coupelle, la coupelle étant disposée dans le logement (5) du premier élément à souder de sorte que sa propre paroi de base plane (9) est disposée sensiblement en affleurement avec une surface du premier élément prévue pour venir en contact avec le deuxième élément à souder, le positionnement correct de la paroi de base (9) étant obtenu par un épaulement axial respectif sous la forme d'une collerette (10) prévue sur la coupelle, du côté opposé à la paroi de base (9).

2. Procédé selon la revendication 1, caractérisé en ce que le deuxième élément (1) à souder est fabriqué à partir d'une tôle d'acier, et en ce que le premier insert (8) est produit par découpage et estampage à partir d'une tôle de matière ferreuse de composition chimique identique ou similaire.

3. Procédé selon la revendication 1, caractérisé en ce que les premier et deuxième éléments (2, 100) sont fabriqués en matières qui ne peuvent pas être électriquement soudées , et ils comportent tous deux une pluralité de logements (5) pour inserts (8), les premier et deuxième inserts étant tous deux produits par découpage et estampage à partir de tôles de matière ferreuse de composition chimique identique ou similaire.

4. Procédé selon la revendication 2 ou 3, caractérisé en ce que le premier élément (2) à souder est une structure interne d'un composant de carrosserie de véhicule, cette structure étant produite par estampage à partir d'une matière plastique synthétique.

5. Procédé selon une quelconque des revendications 1 à 4, caractérisé en ce que l'élément de retenue élastique (30) est constitué d'un joint torique placé dans une gorge (31) du logement (5) dans une position telle qu'il reste en regard, lorsque l'insert (8) est inséré dans le logement, d'un épaulement axial respectif sous la forme d'une collerette (10) portée par cet insert (8).

6. Procédé selon une quelconque des revendications précédentes, caractérisé en ce que les dites coupelles (8) sont fabriquées à partir d'une tôle de matière ferreuse.

7. Procédé selon la revendication 6, caractérisé en ce que l'étape de soudage est effectuée par soudage électrique par points, au moyen de pistolets de soudage respectifs (4) de dimensions prédéterminées, et en ce qu'on utilise des coupelles (8) ayant des dimensions intérieures plus grandes que les dimensions des pistolets de soudage (4) de sorte qu'on peut faire pénétrer ces pistolets à l'intérieur des coupelles (8) afin d'obtenir une interaction avec leurs parois de base planes respectives (9).

8. Procédé selon une quelconque des revendications 1 à 6, caractérisé en ce que l'étape de soudage est effectuée au moyen d'une technique nécessitant l'avance des outils vers un seul côté de la connexion , de préférence par soudage au laser ou soudage à "crampon".
